# EUROPEAN PATENT APPLICATION

(11) **EP 2 667 658 A1**
(43) Date of publication of application: **27.11.2013**
(21) Application number: 12290171.3
(22) Date of filing: 24.05.2012
(51) Int. Cl.: H04W 28/26, H04W 36/00, H04W 84/04

(54) **Method for reserving resources and associated equipment**

(71) Applicant: Alcatel Lucent, 75007 Paris (FR)
(72) Inventor: Capdevielle, Véronique, 91620 Nozay (FR); Randriamasy, Claire-Sabine, 91620 Nozay (FR)
(74) Representative: Croonenbroek, Thomas Jakob

(57) **Abstract**

The present invention refers to a method for reserving resources for a user equipment (UE) in a wireless cellular communication network wherein the user equipment (UE) is connected to a serving cell and wherein the method comprises the following steps:
- selecting a next hop target cell which is a cell adjacent to the serving cell and which is a potential future serving cell for the user equipment (UE) (101),
- sending, from the serving cell to the next hop target cell, a resources reservation request for the user equipment (UE) (102),
upon reception, by the next hop target cell, of the resources reservation request,
- reserving resources, in the next hop target cell, for the user equipment (UE) (103),
wherein the method also comprises the steps of:
- forwarding a resources reservation request for the user equipment (UE) to at least one further hop target cell which is a potential future serving cell for the user equipment (UE) (109), the said further hop target cell being a cell adjacent to either the next hop target cell or to a further hop target cell,
upon reception, by the at least one further hop target cell, of the resource reservation request for the user equipment (UE),
- reserving resources, in the said at least one further hop target cell, for the user equipment (UE) (110),

## Description

### BACKGROUND OF THE INVENTION

The present invention relates to the field of wireless communication and more particularly to the resources reservation process ensuring service continuity during handover operations when crossing a plurality of cells.

In order to cope with the increasing demand for bandwidth in communication network, small cells, also called small radius or short radius cells appear as a promising solution to boost the network capacity and are more and more implemented.

However, operating a high density of short radius cells or small-size cells raises issues in term of mobility management. Indeed, it is worthwhile to notice that when users with their user equipments change their attached cell during a handover operation, the availability of resources necessary to ensure a steady quality of service is usually not guaranteed which results in performance degradation or call drop. Besides, the mobility of connected users is also growing constantly so that technical solutions need to be found in order to provide wireless connections to fast moving users, for example passengers of a train or a car.

### SUMMARY OF THE INVENTION

The present invention refers to a method for reserving resources for a user equipment in a wireless cellular communication network wherein the user equipment is connected to a serving cell and wherein the method comprises the following steps:
- selecting a next hop target cell which is a cell adjacent to the serving cell and which is a potential future serving cell for the user equipment,
- sending, from the serving cell to the next hop target cell, a resources reservation request for the user equipment,
   upon reception, by the next hop target cell, of the resources reservation request,
- reserving resources, in the next hop target cell, for the user equipment,
wherein the method also comprises the steps of:
- forwarding a resources reservation request for the user equipment to at least one further hop target cell which is a potential future serving cell for the user equipment, is the said at least one further hop target cell being a cell adjacent to either the next hop target cell or to a further hop target cell,
   upon reception, by the at least one further hop target cell, of the resource reservation request for the user equipment,
- reserving resources, in the said at least one further hop target cell, for the user equipment.

Preferred embodiments of the present invention overcome at least partially the pre-cited drawbacks of the state of the art and allow providing a steady quality of service while moving through the cells of a network without performance degradation or call drop during handover processes.

According to another aspect of the invention, the number of further hops is determined based on the size of the target cells and on the displacement speed of the user equipment.

According to a further aspect of the present invention, the step of selecting a next hop target cell comprises the step of determining a probability of handover toward the cells adjacent to the serving cell based on user equipments mobility statistical data and if the probability of handover is higher than a predetermined threshold, the adjacent cell is selected as a next hop target cell.

According to an additional aspect of the present invention, the method also comprises a step of designating one of the selected next hop target cells for handover, the said designation being performed based on at least one of the following parameters:
- the determined probability of handover toward the next hop target cells,
- signal quality measured by the user equipment toward the said next hop target cells,
- geographical data of the user equipment.

According to another aspect of the invention, when a next hop target cell is designated for handover for a user equipment, resources reservation for the said user equipment achieved by the non-designated next hop target cells as well as the resources reservation achieved by further hop target cells associated with these non-designated next hop target cells are released.

According to a further aspect of the invention, when a target cell receives resources reservation request for a user equipment, the said target cell checks for the amount of available resources and,
if resources are available for the request,
- the said target cell reserves resources for the user equipment associated with the received request and sends back an acknowledgement message to the sender of the resources reservation request with the amount of reserved resources,
   otherwise,
- the said target cell sends back a rejection message to the sender of the resources reservation request).

According to a further aspect of the present invention, the step of forwarding a resources reservation request for the user equipment to at least one further hop target cell is achieved when the serving cell receives the acknowledgement message from the target cell.

According to an additional aspect of the present invention, the amount of resources reserved by a cell for a user equipment upon reception of a resources reservation request is less or equal to the amount of resources needed by the user equipment in case of handover in the said cell.

According to another aspect of the invention, before handover to a cell, a call admission control process assists a complementary resources reservation in the said cell if the resources already reserved do not match with the resources needed by the user equipment in case of handover in the said cell.

According to a further aspect of the invention, when a next hop target cell is designated for handover, mobility data associated with the user equipment are taken into account for updating user equipments mobility statistical data which are stored in a data repository associated with the serving cell.

According to an additional aspect of the present invention, the step of forwarding a resources reservation request to further hop target cells is triggered by the sending of a dedicated message from the serving cell to a next hop target cell.

The embodiments of the present invention also refer to a network entity of a cellular network comprising:
- processing means configured for:
   - selecting a next hop target cell,
   - reserving resources upon reception of a resources reservation request,
   - releasing resources upon reception of a resources release request,
- communication means configured for:
   - receiving a resources reservation request from another cell,
   - sending a resources reservation request to a selected next hop target cell,
   - receiving a resources release request from another cell,
   - sending a resources release request to a neighbour cell,
wherein the communication means are also configured for forwarding a resources reservation request received from another base station to a next or further hop target cell.

According to another aspect of the present invention, the network entity also comprises:
- a data repository for storing user equipments mobility statistical data,
   wherein the selection means are also configured for selecting a next hop target cell based on user equipments mobility statistical data and wherein the processing means are also configured for:
   - retrieving user equipments mobility data,
   - determining user equipments mobility statistical data,
   - storing them in the data repository.

### BRIEF DESCRIPTION OF THE DRAWINGS

FIG.**1** is a block diagram of the different steps of the method according to the embodiments of the present invention;
FIG.**2** is a diagram of a portion of a cellular network comprising cells of different sizes;
FIG.**3** is a diagram representing a resources reservation request mechanism according to an embodiment of the present invention;
FIG.**4** is a diagram of the functional entities necessary for the implementation of an embodiment of the present invention and their interactions;
Fig.**5** is an example of path followed by a user equipment in a portion of a cellular network;

The following description will be achieved based on the above referenced figures wherein the elements having the same reference refer to elements having the same function.

### DETAILED DESCRIPTION OF THE INVENTION

As used herein, the term "small cell" refers to a cell having a small coverage area or small radius with respect to a macro-cell. The small cells or small-size cells comprises microcells, femto-cell and pico-cells.

As used herein, the term "target cell" for a user equipment connected to a serving cell refers to a cell toward which a handover is expected in the future.

As used herein, the term "next hop target cell" refers to a target cell which is adjacent to the serving cell.

As used herein, the term "further hop target cell" refers to a target cell which is separated from the serving cell by more than one hop and which is a potential future serving cell. A second hop target cell of a serving cell is adjacent to the next hop target cell and can be seen as a next hop target cell of the next hop target cell of the serving cell.

As used herein, the term "user equipment" refers to any electronic equipment allowing the establishment of a connection with remote equipments. The user equipment can be a computer, a phone, a smartphone, a personal digital assistant, a tablet computer or any equipment comprising a processing unit and an interface to allow a user to exchange data with other users of remote equipments.

As used herein, the term "resources" refers to communication resources necessary to establish the communication between a user equipment and the core network. Theses resources refer for example to a frequency channel or a set of frequency channels and a bandwidth associated with these frequency channel that are necessary to ensure the communication between the user equipment and the core network.

As used herein, the term "handover" refers to a mechanism enabling the transfer of a user equipment from one cell to another adjacent cell in a cellular network without signal degradation or signal loss.

As used herein, the term "GPS" refers to the acronym Global Positioning System.

As used herein, the term "user equipments mobility data" refers to data concerning the path followed by the user equipments connected to a cell such as the previous and the next cells to which the user equipments are connected, the trajectory estimate of the user equipments given for example by GPS coordinates or signal strength (triangulation or signal strength and scanning angle...).

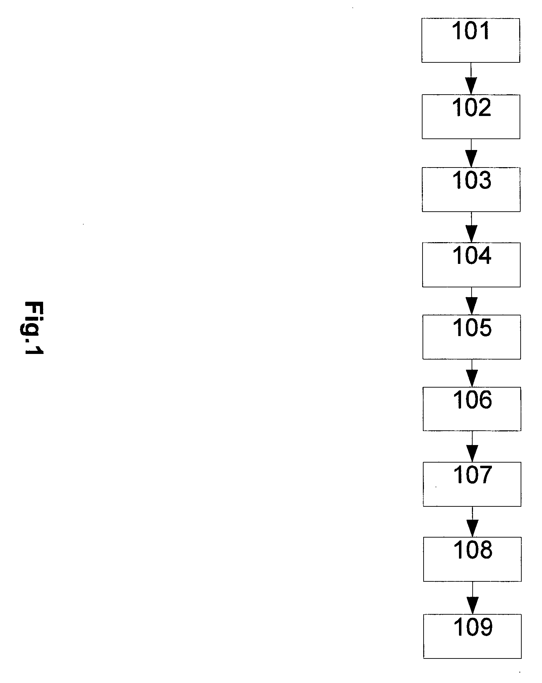

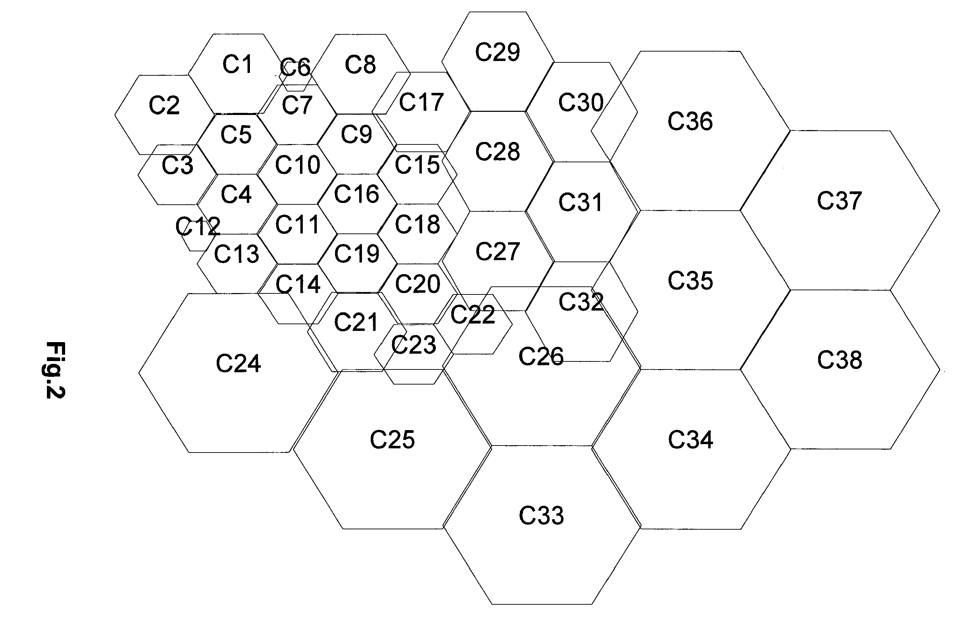

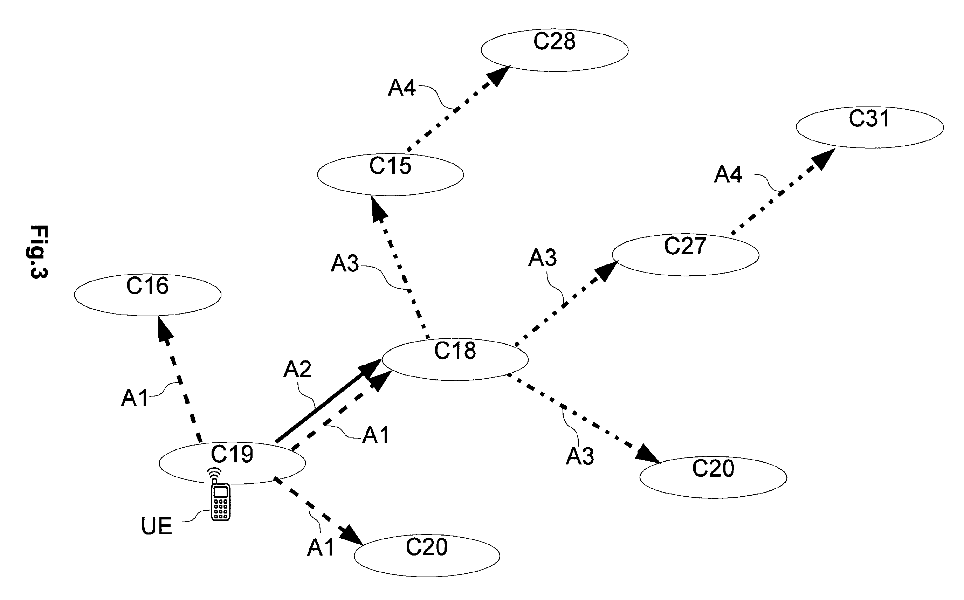

The embodiments of the present invention refer to a provisioning of resources for a user equipment in further hop target cells which are not adjacent to the serving cell, the said further hop target cells being determined based on user equipments mobility statistical data. The general steps of the method according to an embodiment will now be described based on the block diagram of fig. 1, the network portion represented in fig.2 and the diagram of fig.3. The network portion of fig.2 comprises a plurality of cells of different sizes noted from C1 to C38. A user equipment UE is connected to a cell C 19 which is its serving cell as represented in fig.3 .

The first step 101 refers to the selection by the serving cell C19 of at least one next hop target cell for the said user equipment UE. To perform this selection, a probability of handover is calculated for each of the adjacent cells of C19, namely C11, C14, C16, C18, C20 and C21. This probability is calculated based on statistical data concerning the mobility of user equipments. This statistical data may concern the user equipment itself, for example if this user equipment does the same path several times, for example in case of commuting, the handovers occurring on this path will have a high probability or may concern all the user equipments, for example if, most of the time, user equipments being in cell C19 and coming from a given cell perform handover toward C18, the probability of handover toward C18 for user equipments coming from this given cell will be high. Furthermore, this probability evolves according to the displacement direction of the user equipment UE. This displacement direction being determined, for example, based on the scanning angle of the uplink signals received by the base station of cell C19 from the user equipment UE or based on GPS coordinates provided by the user equipment UE to the base station of the cell C 19.

Besides, a probability threshold is predetermined and when the probability of handover toward an adjacent cell becomes higher than the said predetermined threshold, the said cell is selected as a next hop target cell. Thus, several adjacent cells may be selected as next hop target cell, for example cells C16, C18 and C20. Furthermore, if this probability of handover toward a given cell goes below the same or another predetermined threshold, for example due to a change of direction of the user equipment UE, the given cell is removed from the list of the next hop target cell and the reserved resources associated with this given cell and its associated target cells are released.

Furthermore, it has to be noted that anticipated resource reservation requests have been sent previously to the next hop target cells of C 19, herein noted C16, C18 and C20, when the user equipment UE was connected to the previous cell with respect to cell C19. These resource reservation requests are represented by the dotted arrows A1.

The second step 102 refers to the designation of a next hop target cell for handover, for example C18 in the present case. This designation is achieved based on at least one of the following parameters:
- the probability of handover computed in step 101,
- the power level of the signals received by the user equipment UE from the next hop target cells and in particular from cell C 18,
- geographical data of the user equipment UE, notably the fact that UE gets close to the border of cell C 18.

This designation occurs just before the handover, when the user equipment UE is within a predetermined distance of the border between the serving cell C19 and the designated next hop target cell C18. In practice, the coverage area of two adjacent cells overlap so that the handover is performed in the common coverage area. Furthermore, this predetermined distance may be adjusted according to the displacement speed of the user equipment UE. At that time, a handover request, represented by the arrow A2 in fig.3, is sent to the designated next hop target cell C18.

The third step 103 refers to a resource reservation completion of the designated next hop target cell C18. Indeed, at the reception of a resource reservation request (arrow A1), the amount of resources reserved by cell C18 may have been less than the amount of resources needed to ensure services to the user equipment UE so that a completion of the reserved resources is required. Evaluating how much complementary resources are needed is achieved by a Connection Admission Control (CAC) mechanism that is aware of the amount of resources already reserved for the user equipment UE. Resources are then reserved accordingly, if available.

The fourth step 104 refers to the sending back by the designated next hop target cell C18 of an acknowledgment or a rejection for the handover request. Indeed, if the amount of available resources in the designated next hop target cell C18 is not sufficient to achieve the resources reservation completion in step 103, a rejection message is sent back to the serving cell C19. If resources are available and reserved in step 103, an acknowledgment message is sent back to the serving cell C19. In practice, the sending of a message from a first cell to a second cell corresponds to the sending of a request from the base station of the first cell to the base station of the second cell.

The fifth step 105 refers, when an acknowledgment message for handover is received from the designated next hop target cell C18, to the sending of a resources release request from the serving cell C 19 to the non-designated next hop target cells, cells C 16 and C20 in the present case, and possibly further hop target cells associated with C16 and C20 and the release of the resources reserved previously in these target cells.

The sixth step 106 refers to the sending of a further hop reservation request, second hop reservation request in the present case, by the serving cell C19 to the designated next hop target cell C18. The request comprises an identifier of the user equipment UE, an identifier of the serving cell C19 having sent the request, the amount of resources needed for the user equipment UE and possibly a time to release delay so that the resources reserved are released after a predetermined amount of time if no other instructions have been transmitted in the meantime.

The seventh step 107 refers to the forwarding of the further hop reservation request by the next hop target cell C18 to selected further hop target cells, for example second hop target cells C15, C20 and C27 in the present case as represented by the arrows A3 in fig.3. The selection of the second hop target cells being achieved based on the same parameters that the next hop target cells, i.e. the user equipments mobility statistical data in cell C18. However, another predetermined threshold may be used to select the further hop target cells.

The eighth step 108 refers to the resources reservation by the second hop target cells C 15, C20 and C27 that have received a request at step 107. The amount of resources reserved may vary depending on the amount of available resources in the second hop target cells C15, C20 and C27. This amount of resources is less or equal than the amount of resources needed by the user equipment UE. In an extreme case, this amount may be zero. However, if no resources are available, the second hop target cell may not comply with the request and a rejection of the request is established. Thus, an acknowledgment or a rejection is sent back to the serving cell C 19 via the next hop target cell C18.

The ninth step 109 refers to the handover from the serving cell C19 to the next hop target cell C18 which becomes the new serving cell, the second hop target cells C20 and C27 with respect to cell C19 becoming the new next hop target cells with respect to cell C18. This handover is achieved when the user equipment reaches the coverage area of cell C18. Besides, the handover information (from C19 to C18) is used to update the user equipments statistical mobility data in cell C19.

Furthermore, a resources reservation request may be sent to further hop target cells, for example to third hop target cells such as C28 or C31 as represented by the arrows A4. Besides, the number of further hops for sending resources reservation is selected according to the speed of the user equipment UE and the size of the target cells. Indeed, as the goal of the method is to ensure a steady quality of signal through the network, the faster the user equipment is moving and the smaller the cells, the higher the number of needed further hops to ensure that resources are always available for the user equipment UE. Thus, the number of further hops can be determined based on the ratio of the user equipment displacement speed to the size of the cells of the different hops. For example, in the case of small-size cells such as cells C19 and C18 in fig.2 and a user equipment located in a moving car, the required number of hops will be higher than with macro-cells such as C29 or C30 and a user equipment handled by a pedestrian.

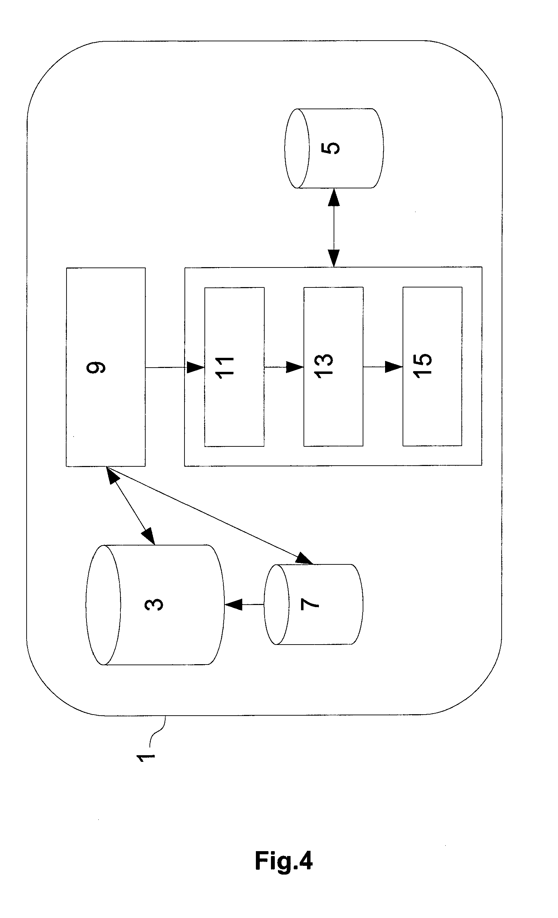

The functional architecture of an embodiment of the element 1 enabling the implementation of the steps presented previously will now be described based on fig.4. This element 1 is referred herein to a multiple cell handover prediction and provisioning (MCHOPP) element and is embedded in a network entity that manages the handovers between the cells, for example the base station. The MCHOPP 1 comprises:
- a HandOver Information Base (HOIB) 3 which is associated with a cell and is based on a learning procedure. It comprises a data repository to store the user equipment mobility statistical data that are used to compute the probability of handover toward each of the adjacent cells. These probabilities are determined based on the said statistical data using a learning procedure. Indeed, the user equipment sends regularly or at the time of a handover a measurement report to the base station of the serving cell that enables the establishment of the user equipment mobility statistical data. This measurement report comprises mobility data such as the power level received by the user equipment from the different base stations of the surrounding cells for different locations. Thus, the HOIB 3 determines the most probable next hop target cells. Once a target cell is selected and the handover achieved, the information of the cell toward which the handover is performed are fed to the learning procedure to update and store the user equipments mobility statistical data in the data repository.
- an Anticipated Neighbor Resources Reservation registry (ANRR) 5 to store the amount of resources reserved within the cell for user equipments for which the cell is a target cell and the amount of resources reserved by the target cells for the user equipment for which the cell is the serving cell. Additional information may also be stored in the ANRR 5 such as a resource reservation date, identifiers of the user equipments, requesting cells and target cells for which resources are reserved and a time to release counter to release reserved resources after a predetermined amount of time, for example if the user equipment remains motionless in another cell or if the user equipment is switched off.
- a HandOver Location Base (HOLB) 7 which is linked to the HOIB and which is used to store additional information to improve the handover probability determination such as the direction of the UE determined based on the power levels measured by the user equipment of the signals sent from the base stations of the surroundings or based on GPS coordinates measured by the user equipment or based on a scanning angle of the signal received from the user equipment by the base station of the serving cell. In addition, the global trajectory of the user equipment comprising the previous cells to which the user equipment was connected can also be used. Thus, based on these mobility parameters which are gathered in the measurement report provided by the user equipment, the HOLB 7 computes a probability of handover toward the adjacent cells and provides this probability to the HOIB 3 in order for the HOIB 3 to improve its handover probability determination. The computation of the different handover probabilities enables to sort the adjacent cells and to determine the adjacent cells having the highest probability of being designated for handover. A predetermined threshold is set and when the handover probability for a cell is higher than the predetermined threshold, the cell is selected as a next hop target cell by a target cell selection module 9.
- a Further Hop Reservation procedure module (FHRV) 11 that ensures the resources reservation for the further hop target cells. The FHRV 11 triggers the sending of a request to the next hop target cell for forwarding a resources reservation request to second hop target cells. The next hop target cells determine the second hop target cells based on the information stored in their HOIB 3. Possibly, requests aimed at further hop target cells such as third hop target cells may also be sent by the FHRV 11. The FHRV 11 also processes the acknowledgments or rejections received in response to the further hop target cell reservation requests.
- a Further Hop ReserVation-aware Connection Admission Control module (FH-RV-aware CAC) 13 that ensures the completion of the resources reservation procedure when the cell is designated for handover.
- A Next Hop Resources reLease module (NH-RL) 15 to release the resources reserved by the FHRV 11 and that will not be used. Indeed, if several adjacent cells are selected as next hop target cells, resources are reserved in several adjacent cells. As only one of the next hop target cell is designated for handover, the resources reserved in the other adjacent cells need to be released when the handover process is launched, i.e. when a handover request acknowledgment is received for the user equipment. The amount of reserved resources may be known thanks to the ANRR registry 5. The resources release is achieved by sending resources release requests with an identifier of the user equipment to the next hop target cells that are not designated for handover and that have reserved resources. Furthermore, such resources release procedure may be achieved for further hop target cells. In this case, the resources release requests are forwarded by the next hop target cells that are not designated for handover toward the further hop target cells.

The steps of the method as well as the functional elements previously described are implemented through or together with processing means comprising a computer program written in e.g. Very high speed integrated circuit Hardware Description Language (VHDL) or C, C++, Java, or using another programming language, or implemented by one or more VHDL, C, C++, or Java processor routines, or several software modules being executed on at least one hardware device.

The computer program product that comprises the computer program can be any kind of device which can be programmed including e.g. any kind of computer like server or a personal computer, an FPGA, a processor, or the like, or any combination thereof, e.g. one processor and 2 FPGA.

The storage means that comprise the software instructions of the computer program as well as the storage means used to store parameters or data necessary for the method could be any kind of data repository in any storage medium such as a CD or disk, e.g. Universal Serial Bus (USB) memory stick or any kind of memory, e.g. at least one random access memory (RAM) or read-only memory (ROM), or the like, or any combination thereof, e.g. one ROM and 2 RAMS, or 2 disks, etc.

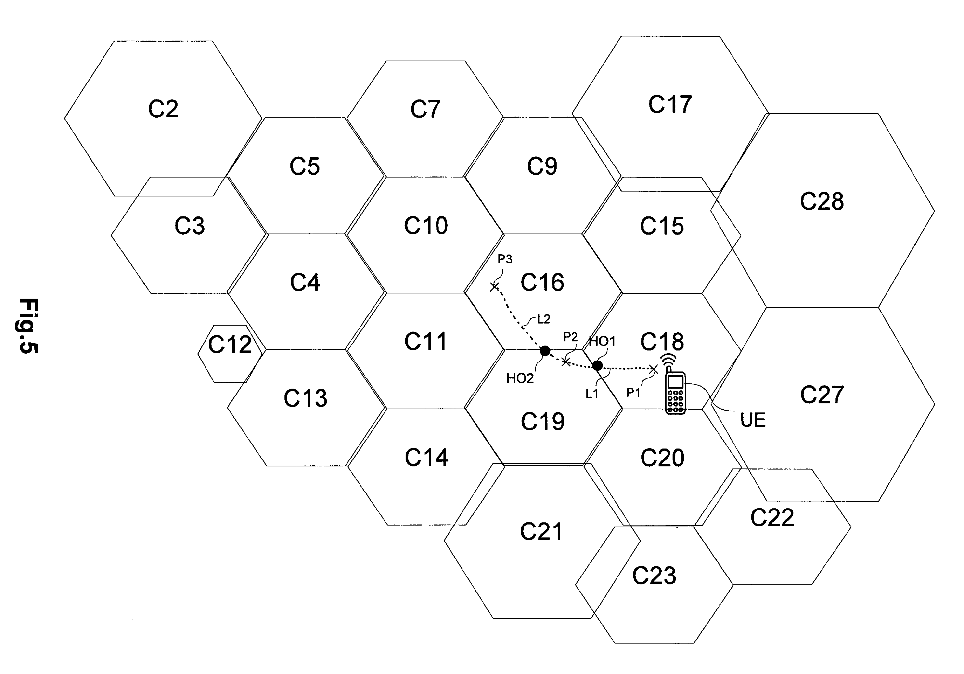

In order to better understand the present invention, an example will now be described in detail. A user equipment UE is switched on by a user while being initially in position P1 which is in the coverage area of cell C18 as described in fig.5. Position P1 corresponds to the home of the user and the lines L1 and L2 correspond to the trajectory for this user to go to work. Thus, the user equipment UE gets connected to the base station of cell C18 which becomes the serving cell. Besides, as the user follows the trajectory L1 almost every day, the probability of handover toward cell C19 computed by the HOIB 3 of the base station of cell C18 is very high and therefore above a threshold predefined in the HOIB 3, for example 20%, so that cell C19 is selected as a next hop target cell and a resources reservation request is sent from C18 to C 19 in order for C19 to reserve resources for UE. Indeed, as the user equipment UE has been switched on in cell C18, no resources reservation have been performed in next or further hop target cells so that initialization steps are required in cell C18 to reserve resources in other cells.

Then, the user with its user equipment UE starts to walk to position P2 along the path defined by the line L1. The direction of UE is taken into account by the HOLB 7 of cell C18 to compute the probability of handover toward the adjacent cells. This computation is taken into account by the HOIB 3 so that the probability of handover toward cell C16 also goes beyond the predetermined threshold of 20% so that cell C16 is also selected as a next hop target cell and a resource reservation is sent to cell C16. When the user arrives at the location HO1, cell C19 is designated for handover and a handover request is sent to cell C19. When the handover request is received by cell C19, the FH-RV-aware-CAC 13 of cell C19 achieves a completion of the resources reservation associated with the user equipment UE using CAC mechanism. For example if 40% of the resources needed by UE were reserved at the reception of the resources reservation request sent by cell C18, the remaining 60% are then reserved and a handover acknowledgment is sent back from cell C19 to cell C18. At the reception of the acknowledgment by the cell C18, a resources release request is sent by the NH-RL 15 of cell C18 to cell C16. The resources associated with the user equipment UE in C16 are released. Furthermore, based on the walking speed of the user and the size of cell C19, it is determined by cell C18 that resources need to be reserved two hops ahead. As a consequence, the FHRV 11 of cell C 18 sends a further hop resources reservation request to cell C19 to forward it to its next hop target cells. The HOIB 3 of the base stations of cell C19 then select its next hop target cells based on the fact that UE is moving from C18 so that C11 and C16 are selected as next hop target cells of cell C19 and the further hop resources reservation is forwarded to cell C11 and C16. As resources are available in both cells C11 and C16, acknowledgments are sent back to cell C18 via cell C19 with the amounts of resources reserved by cell C11 and C16. These amounts are then stored within the ANRR 5 of cells C11 and C16. If a rejection is received from one of the target cells C11 and C16 because of a lack of available resources, the serving cell C18 keeps sending resources reservation request at predetermined time intervals until an acknowledgment is received or until the user equipment UE leaves C18.

The handover from cell C18 to C19 is then performed and cell C19 becomes the serving cell. The HOIB 3 of cell C18 uses this handover and the measurement report provided by the user equipment UE before the handover to update the user equipment mobility statistical data which would be used for the computation of the handover probability of future connected user equipments.

After the handover has been performed, the user equipment keeps following the line L1. At point P2, the user of the user equipment UE takes a car and follows the path L2. Due to the speed of the car, it is determined that a further hop of resources reservation is requested. At location HO2, cell C16 is designated for handover and a handover request is sent to cell C16. The resources reservation completion is performed by the FH-RV-aware-CAC 13 of cell C16 and a handover acknowledgment is sent back to cell C19. The NH-RL 15 of cell C19 sends a resources release request to cell C11. The resources reserved in cell C11 are then released. After that, the FHRV 11 of cell C19 sends a further hop resources reservation request to cell C16 to forward it to its next hop target cells and its next next hop target cells (as one more hop is requested due to the speed of the user equipment UE). The next hop target cells are then selected by the HOIB 3 of cell C 16, for example C9 and C10 and a resource reservation is forwarded to cell C9 and C10. Furthermore, a further hop resources reservation is also sent to cells C9 and C10 to be forwarded to their next hop target cells, for example cells C5 and C7.

The handover between cell C19 and C16 is then performed so that cell C16 becomes the new serving cell. The user equipment sends a measurement report to the base station of cell C19 just before the handover. The user and its user equipment UE keeps following the line L2 to its destination P3. If the user equipment UE stays for a long time at location P3, the resources reserved in the target cells (C9, C10, C7 and C5) are released when the delay of the time to release counter of their ANRR 5 has elapsed.

Thus, with the embodiments of the present invention, the management of the resources reservation and release based on mobility data of the user equipments and the features of the network in the user equipment neighborhood makes it possible to ensure a steady quality of signal with fast displacements and/or small-size cells network. Furthermore, the use of a learning procedure based on previous handovers and the update of the procedure with new handovers enable to improve the quality of a prediction of the user equipment future path and therefore to optimize the resources reservation and reserve only the required amount of resources necessary to produce a steady quality of signal to fast moving users without degrading the quality of signal of other users.

## Claims

1. Method for reserving resources for a user equipment (UE) in a wireless cellular communication network wherein the user equipment (UE) is connected to a serving cell and wherein the method comprises the following steps:
- selecting a next hop target cell which is a cell adjacent to the serving cell and which is a potential future serving cell for the user equipment (UE) (101),
- sending, from the serving cell to the next hop target cell, a resources reservation request for the user equipment (UE) (102),
upon reception, by the next hop target cell, of the resources reservation request,
- reserving resources, in the next hop target cell, for the user equipment (UE) (103),
wherein the method also comprises the steps of:
- forwarding a resources reservation request for the user equipment (UE) to at least one further hop target cell which is a potential future serving cell for the user equipment (UE) (109), the said at least one further hop target cell being a cell adjacent to either the next hop target cell or to a further hop target cell,
upon reception, by the at least one further hop target cell, of the resource reservation request for the user equipment (UE),
- reserving resources, in the said at least one further hop target cell, for the user equipment (UE) (110).

2. Method in accordance with claim 1 wherein the number of further hops is determined based on the size of the target cells and on the displacement speed of the user equipment (UE).

3. Method for reserving resources in accordance with claim 1 or 2 wherein the step of selecting a next hop target cell comprises the step of determining a probability of handover toward the cells adjacent to the serving cell based on user equipments mobility statistical data and if the probability of handover is higher than a predetermined threshold, the adjacent cell is selected as a next hop target cell.

4. Method in accordance with one of the previous claims wherein it also comprises a step of designating one of the selected next hop target cells for handover (105), the said designation being performed based on at least one of the following parameters:
- the determined probability of handover toward the next hop target cells,
- signal quality measured by the user equipment toward the said next hop target cells,
- geographical data of the user equipment (UE).

5. Method in accordance with claim 4 wherein when a next hop target cell is designated for handover for a user equipment, resources reservation for the said user equipment achieved by the non-designated next hop target cells as well as the resources reservation achieved by further hop target cells associated with these non-designated next hop target cells are released (107).

6. Method in accordance with one of the previous claims wherein when a target cell receives resources reservation request for a user equipment, the said target cell checks for the amount of available resources and,
if resources are available for the request,
- the said target cell reserves resources for the user equipment associated with the received request and sends back an acknowledgement message to the sender of the resources reservation request with the amount of reserved resources,
otherwise,
- the said target cell sends back a rejection message to the sender of the resources reservation request (104).

7. Method in accordance with claim 6 wherein the step of forwarding a resources reservation request for the user equipment (UE) to at least one further hop target cell is achieved when the serving cell receives the acknowledgement message from the target cell.

8. Method in accordance with one of the previous claims wherein the amount of resources reserved by a cell for a user equipment upon reception of a resources reservation request is less or equal to the amount of resources needed by the user equipment (UE) in case of handover in the said cell.

9. Method in accordance with claim 8 wherein before handover to a cell, a call admission control process assists a complementary resources reservation in the said cell if the resources already reserved do not match with the resources needed by the user equipment in case of handover in the said cell (106).

10. Method in accordance with one of the previous claims in combination with claim 4 wherein when a next hop target cell is designated for handover, mobility data associated with the user equipment are taken into account for updating user equipments mobility statistical data which are stored in a data repository associated with the serving cell.

11. Method in accordance with one of the previous claims wherein the step of forwarding a resources reservation request to further hop target cells is triggered by the sending of a dedicated message from the serving cell to a next hop target cell (108).

12. Network entity of a cellular network comprising:
- processing means (1) configured for:
- selecting a next hop target cell,
- reserving resources upon reception of a resources reservation request,
- releasing resources upon reception of a resources release request,
- communication means configured for:
- receiving a resources reservation request from another cell,
- sending a resources reservation request to a selected next hop target cell,
- receiving a resources release request from another cell,
- sending a resources release request to a selected neighbour cell,
wherein the communication means are also configured for forwarding a resources reservation request received from another base station to a next or further hop target cell.

13. Network entity in accordance with claim 12 comprising:
- a data repository for storing user equipments mobility statistical data, wherein the selection means 9 are also configured for selecting a next hop target cell based on user equipments mobility statistical data and wherein the processing means (1) are also configured for:
- retrieving user equipments mobility data,
- determining user equipments mobility statistical data,
- storing them in the data repository.
